# EUROPEAN PATENT SPECIFICATION

(11) **EP 2 787 671 B1**
(45) Date of publication and mention of the grant of the patent: **03.10.2018**
(21) Application number: 13305445.2
(22) Date of filing: 05.04.2013
(51) Int. Cl.: H04L 1/00

(54) **Downlink communication with repetition transmissions**
Abwärtsstreckenkommunikation mit Wiederholungsübertragung
Communication de liaison descendante avec répétition de transmissions

(43) Date of publication of application: 08.10.2014
(73) Proprietor: Alcatel Lucent, 91620 Nozay (FR)
(72) Inventor: Wong, Shin Horng, Swindon, Wiltshire SN5 7DJ (GB); Baker, Matthew, Swindon, Wiltshire SN5 7DJ (GB); Zhang, Min, Swindon, Wiltshire SN5 7DJ (GB)
(74) Representative: Berthier, Karine

(56) References cited:
- ALCATEL-LUCENT ET AL: "Feasibility of coverage extension of physical channels for MTC devices", 3GPP DRAFT; R1-130462 - REL-12 MTC COVERAGE - COVERAGE EXT PHY CHANNELS V0.3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS C , vol. RAN WG1, no. St Julian; 20130128 - 20130201 19 January 2013 (2013-01-19), XP050663744, Retrieved from the Internet: URL:http://www.3gpp.org/ftp/tsg_ran/WG1_RL 1/TSGR1_72/Docs/ [retrieved on 2013-01-19]

## Description

### FIELD OF THE INVENTION

The present invention relates to wireless telecommunications methods, a computer program product and network nodes.

### BACKGROUND

Wireless telecommunications systems are known. In a cellular system, radio coverage is provided to user equipment, for example, mobile phones, by areas known as cells. A base station is located in each cell to provide the radio coverage. User equipment in each cell receives information and data from the base station and transmits information and data to the base station.

Information and data transmitted by the base station to the user equipment occurs on channels of radio carriers known as downlink channels. Information and data transmitted by user equipment to the base station occurs on channels of radio carriers known as uplink channels. Although the deployment of base stations is largely controllable by the network operator, the deployment of user equipment is not. The deployment of user equipment within the network can cause unexpected consequences.

Accordingly, it is desired to provide an improved technique for communicating with user equipment.

3GPP TSG-RAN WG1 meeting #72, 28 January to 1 February 2013, Agenda item 7.3.4 Alcatel-Lucent "Feasibility of coverage extension of physical channels for MTC devices" discloses the idea of providing a coverage enhancement of 20 dB by repeating transmissions. It recognises that to achieve this, the required gain for PBCH is 11.4 dB which requires 14 times as much repetition as currently provided. It looks at where this can be provided and recognises that providing this all the time would consume too many resources and therefore it is essential to limit the occasion when increased PBCH repetition is used.

### SUMMARY

According to a first aspect, there is provided a wireless telecommunication network base station method according to Claim 1.

The first aspect recognizes that an increasing problem with the deployment of user equipment is that they can become deployed in areas suffering from high attenuation. This high attenuation can cause the user equipment to be unable to decode downlink configuration information, which is essential for being able to access appropriate downlink traffic. This means that when deployed in these areas of high attenuation, the user equipment is effectively unable to receive traffic from the base station. The first aspect also recognizes that existing standards fail to provide an adequate technique for providing this downlink configuration information in high attenuation deployments, which means that user equipment implementing those standards are unable to communicate with the network during such deployment. The first aspect further recognizes that whilst this is inconvenient for some user equipment when located in these high attenuation areas, coverage is restored when the user equipment moves to a lower attenuation area but that there is an emerging class of user equipment (such as machine type communication (MTC) devices such as, for example, smart meters) which are immobile once installed; for those user equipment no network coverage is provided.

Existing solutions target a 20 dB coverage improvement for such devices. Repetition of a message at the physical layer is one technique providing such coverage improvement. In order to achieve a 20 dB improvement, the theoretical number of repetitions needed is 100 times more than currently used. In reality, this amount of repetition is likely going to need to be even higher due to imperfect channel estimation, fading, frequency error, etc. Although repetition is a simple way to improve the coverage, it is highly inefficient in utilizing the spectrum especially when the amount of repetitions is very high (in the hundreds).

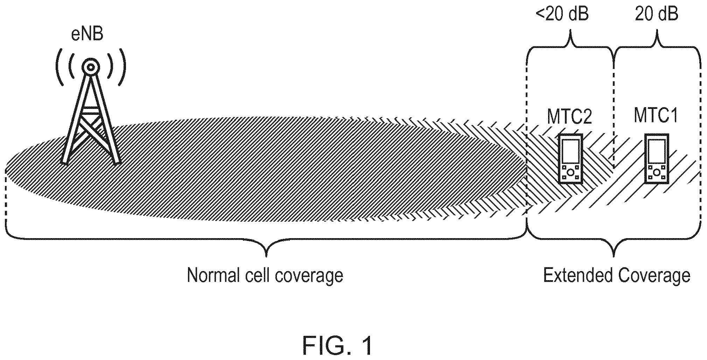

However, the first aspect recognizes that in an actual deployment, not all MTC devices would require 20 dB coverage improvements. Figure 1 shows the coverage of a cell which consists of the existing (termed as 'normal') coverage and the targeted coverage extension (due to MTC located at the cell edge and in a basement). For those MTC devices in the normal coverage, no additional coverage enhancement is required. For those MTC devices in the extended coverage region as shown Figure 1, not all MTC devices require as much as 20 dB coverage extension. Some MTC devices (e.g. MTC 2 located in the region shaded in Figure 1) will require coverage extension that is less than 20 dB and hence a message to/from these devices would require less repetitions compared to a MTC device in the 20 dB region. As an example, in Figure 1, MTC1 requires a 20 dB improvement and MTC2 requires a 13 dB coverage improvement, so the number of repetitions for MTC2 is 4 times less than that of MTC1. The amount of resource saving from using less than the maximum number of repetitions for MTC2 is significant since the maximum number of repetitions is large (i.e. in the hundreds), thereby improving spectral efficiency significantly. Hence, providing different levels of coverage extension for MTC devices is desirable.

Accordingly, a base station method may be provided. The method comprises the step of repeating, within a radio frame of a downlink physical resource, the transmission of a physical broadcast channel. That is to say that the message transmitted by the physical broadcast channel may be repeated a number of times within a radio frame transmitted on a downlink between the base station and user equipment. By repeating the transmission of the physical broadcast channel, the coverage is increased to the desired amount, which may be less than 20 dB.

The step of repeating transmission comprises repeating transmission of the physical broadcast channel a plurality of times within the radio frame. Accordingly, the message transmitted by the physical broadcast channel may be repeated more than once. Again, this helps to improve the coverage.

The step of repeating transmission comprises repeating transmission of the physical broadcast channel with one of a plurality of patterns of repeating transmissions of the physical broadcast channel within the radio frame. Accordingly, any one of a number of different patterns of repetition of the message carried by the physical broadcast channel may be utilized in order to provide different levels of coverage.

In one embodiment, each of the plurality of patterns comprises differing numbers of repeating transmissions of the physical broadcast channel within the radio frame. Accordingly, each pattern may utilize different numbers of repetitions in order to vary the coverage provided.

The plurality of patterns of repeating transmissions comprise nested sets of repeating transmissions of the physical broadcast channel within the radio frame. Nesting the patterns simplifies the arrangements since the patterns overlap, which helps with decoding of the transmissions by the user equipment.

In one embodiment, a pattern with a lower number of repeating transmissions comprises a subset of a pattern with a higher number of repeating transmissions. Accordingly, each pattern at a higher level in the nested hierarchy includes all the repetitions of a pattern which is lower in the nested hierarchy. That is to say that the pattern with the more repetitions includes all the repetitions made by patterns with fewer repetitions, plus some additional repetitions.

In one embodiment, the method comprises selecting between the plurality of patterns of repeating transmissions. Accordingly, the patterns may be selected dynamically by the base station in order to change its coverage level.

In one embodiment, the method comprises selecting between the plurality of patterns of repeating transmissions based on at least one of time and base station load.

In one embodiment, the method comprises selecting one of the plurality of patterns having a lower number of repetitions for a first period and then selecting one of the plurality of patterns having a higher number of repetitions for a second period. It will be appreciated that in embodiments the opposite may also occur.

In one embodiment, the step of repeating comprises repeating transmission of a subset of information carried by the physical broadcast channel. By reducing the information carried by the repetitions, the amount of resources consumed by these repetitions may be reduced and also may provide reduced functionality to user equipment in areas of high attenuation.

In one embodiment, the physical broadcast channel carries an indication of its repetition within the radio frame. Accordingly, an indication of the number of repetitions used may be provided which would indicate the correct number of repetitions to those user equipment able to decode the transmissions with fewer than the total number of repetitions used (due being located in a lower attenuation area).

According to a second aspect, there is provided a wireless telecommunication network base station according to Claim 9.

In one embodiment, a pattern with a lower number of repeating transmissions comprises a subset of a pattern with a higher number of repeating transmissions.

In one embodiment, the base station comprises selection logic operable to select between the plurality of patterns of repeating transmissions.

In one embodiment, the selection logic is operable to select between the plurality of patterns of repeating transmissions based on at least one of time and base station load.

In one embodiment, the selection logic is operable to select one of the plurality of patterns having a lower number of repetitions for a first period and then selecting one of the plurality of patterns having a higher number of repetitions for a second period.

In one embodiment, the transmission logic is operable to repeat transmission of a subset of information carried by the physical broadcast channel.

In one embodiment, the physical broadcast channel carries an indication of its repetition within the radio frame.

According to a third aspect, there is provided a wireless telecommunication user equipment method according to Claim 10.

In one embodiment, a pattern with a lower number of repeating transmissions comprises a subset of a pattern with a higher number of repeating transmissions.

In one embodiment, the method comprises selecting between the plurality of patterns of repeating transmissions.

In one embodiment, the method comprises selecting one of the plurality of patterns having a lower number of repetitions for a first period and then selecting one of the plurality of patterns having a higher number of repetitions for a second period.

In one embodiment, the repetitions comprise repeating transmission of a subset of information carried by the physical broadcast channel.

In one embodiment, the physical broadcast channel carries an indication of its repetition within the radio frame.

According to a fourth aspect, there is provided wireless telecommunication user equipment according to Claim 11.

In one embodiment, a pattern with a lower number of repeating transmissions comprises a subset of a pattern with a higher number of repeating transmissions.

In one embodiment, the user equipment comprises selection logic operable to select between the plurality of patterns of repeating transmissions.

In one embodiment, the selection logic is operable to select one of the plurality of patterns having a lower number of repetitions for a first period and then selecting one of the plurality of patterns having a higher number of repetitions for a second period.

In one embodiment, the repetitions comprises repeating transmission of a subset of information carried by the physical broadcast channel.

In one embodiment, the physical broadcast channel carries an indication of its repetition within the radio frame.

According to a fifth aspect, there is provided a computer program product operable, when executed on a computer, to perform the method steps of the first or the third aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates the coverage of a cell showing existing coverage and a targeted coverage extension;
Figure 2 illustrates a nested set of repetition patterns according to one embodiment; and
Figure 3 illustrates two base stations operating with different coverage levels according to one embodiment.

### DESCRIPTION OF THE EMBODIMENTS

### Overview

Before discussing the embodiments in any more detail, first an overview will be provided. Embodiments provide an arrangement with multiple, selectable repetition patterns for a broadcast channel such as, for example, a physical broadcast channel (PBCH), where each repetition pattern contains a specific number of repetitions in order to provide a target amount of coverage extension. The repetition pattern may be at least one of:
- a different selected pattern in different cells within a network since each cell may have a different target coverage extension, and/or
- a different selected pattern at different times, i.e. the selected pattern can change with time.

The user equipment such as, for example, MTC devices would blind decode the PBCH, that is to say that the MTC devices would try all repetition patterns until it manages to decode the PBCH.

### Repetition Patterns

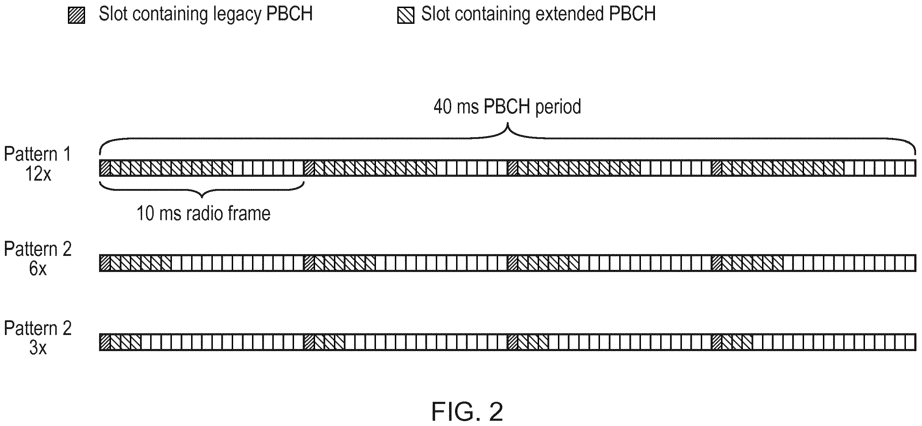

Typically, the repetition patterns are arranged so that a repetition pattern with a lower number of repetitions is a subset of another repetition pattern with a higher number of repetitions. That is to say that the repetition patterns form a nested structure as shown in Figure 2, where it is assumed that the existing long-term evolution (LTE) 40 ms PBCH period is used. In Figure 2, Pattern 1 has the highest number of repetitions (i.e. 12×) and it also contains the repetition pattern for Pattern 2 (6×) and Pattern 3 (3×), each of which have lower number of repetitions.

This allows a MTC device that requires lower level of coverage extension (e.g. 14 dB) to use Pattern 3 to obtain the PBCH even though an evolved nodeB (eNB) uses Pattern 1 for a 20 dB coverage extension, thereby reducing the number of blind decodes. On the other hand, a MTC device using Pattern 1 may not be able to successfully decode the PBCH if the eNB uses Pattern 2. This therefore allows the eNB to exclude MTC devices that are not within the targeted coverage, which can be used to schedule MTC devices at different coverage levels at different time.

Although the arrangement shown in Figure 2 shows the repetitions being transmitted in consecutive slots, it will be appreciated that this need not be the case and that other, non-consecutive slots may be used to carry the repetitions.

### Repetition Formats

In one embodiment, the existing PBCH has a different format to that of the PBCH used for coverage extension; although they can also be the same. For example, the extra repetitions might apply to only a subset of the information of the broadcast channel. This would result in MTC devices that are in extended coverage regions being able to access only a subset of the broadcast channel information. In particular, in order to reduce the amount of broadcast channel information that needs to be repeated, one or more of the following measures could be applied:
- the control channel format information (Physical hybrid ARQ indicator channel (PHICH) format) might not be necessary if the Enhanced Physical Downlink Control Channel (EPDCCH) is used for downlink control signaling rather than the Physical Downlink Control Channel (PDCCH);
- the system bandwidth could be predetermined, or selected from a reduced set of possible bandwidths, in the case of extra repetitions;
- the number of eNB antennas could be predetermined, or selected from a reduced set of possible bandwidths, in the case of extra repetitions.

### Example Arrangement & Operation

A 20 dB coverage improvement when user equipment is located in high attenuation locations is that required for the weakest physical channel, which for frequency-division duplexing (FDD) is the Physical Uplink Shared Channel (PUSCH). However, for the other channels, an improvement of less than 20 dB is sufficient. For PBCH, the improvement required is 11.7 dB (see R1-130462) and this requires 15× repetitions.

In this example arrangement, three coverage levels are defined:
1) Normal Coverage: This is the coverage used to provide service to legacy UEs. This coverage does not require any changes (e.g. extra repetitions) to the existing PBCH.
2) Extended Coverage Level 1: This coverage is used to provide service to MTC devices at the cell edge which have a coverage hole of up to 14 dB (i.e. for PUSCH, the weakest physical channel). For this coverage level the PBCH is repeated 4× (for a coverage extension of 6 dB).
3) Extended Coverage Level 2: This is coverage used to provide service to MTC devices at the cell edge which have a coverage hole of up to 20 dB (i.e. for PUSCH, the weakest physical channel). For this coverage level the PBCH is repeated 15× (for a coverage extension of 11.7 dB)

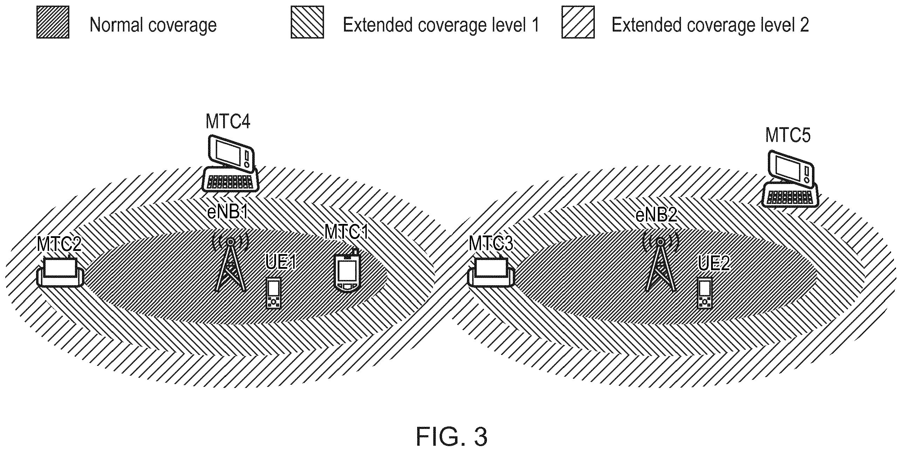

Figure 3 shows two eNBs (eNB1 & eNB2) with the different coverage levels. The MTC devices (MTC1-MTC5) are used for smart meters, which are delay-tolerant and have small packets (for example, meter reading updates) to be sent. These smart meters are programmed to operate during non-busy hours, for example, between 1am and 4am.

During the day, the eNBs operate using only the normal coverage, for example, to service UE1 and UE2. Extended coverage level 1 and level 2 are not configured during this time and hence there is no coverage for MTC2, MTC3, MTC4 and MTC5.

Between 1am to 2am:
∘ eNB1 still has significant traffic from UE1 and therefore operates with Normal Coverage. This avoids traffic with MTC2 & MTC4 and avoids the heavy repetitions that would consume large resources, taking away resources from UE1. Here only MTC1 is able to receive services and updates from eNB1, but without the need for additional repetitions.
∘ eNB2 has very low traffic loading since UE2 has very low traffic. It starts off with Extended Coverage Level 1, which provide services to MTC3. It will be appreciated that although the PBCH is repeated 4×, MTC3 would require at least 25× repetitions on its PUSCH, as mentioned above.

Between 2am to 3am:
∘ eNB1 traffic from UE1 has died down and it therefore switches to operate in Extended Coverage Level 1. MTC1 and MTC2 are then able to receive service from eNB1.
∘ eNB2 changes its coverage level to Extended Coverage Level 2. MTC5 is then able to receive service from eNB2. As mentioned above, the nested repetition of PBCH allows MTC3 to use a lower repetition level to decode the PBCH (which is now at a higher repetition level). It will be appreciated that although the PBCH is repeated 15×, MTC5 would require at least 100× repetitions on its PUSCH, as mentioned above.
∘ It is likely that MTC1 and MTC3 have completed their data transmission so that eNB1 and eNB2 may or may not need to serve MTC1 and MTC3 anymore during the period with extended coverage.

Between 3am to 4am:
∘ eNB1 changes its coverage level to Extended Coverage Level 2. MTC4 is then able to receive service from eNB1.
∘ eNB2 maintains its coverage level at Extended Coverage Level 2, providing service to UE2, MTC3 and MTC5.
∘ Note that it is likely that MTC1, MTC2, MTC3, and MTC5 have completed their data transmission so that eNB1 and eNB2 may or may not need to serve those MTC devices anymore during the period with extended coverage.

After 4am:
∘ eNB1 and eNB2 revert back to Normal Coverage, which then denies service to MTC2, MTC3, MTC4 and MTC5.

It will be appreciated that with different levels of coverage, only some of the MTC devices require the full 100× repetitions on its PUSCH (and corresponding repetitions on other channels), the other MTC devices use significantly less (25× repetitions). Also, the MTC devices that require heavy repetitions can be dynamically scheduled to perform their reception/transmission at a time controlled by the eNB (where the scheduler resides).

The level of coverage is also cell-specific which enables dynamic data offloading among cells. If an eNB can finish data transmission for its own MTC devices within a certain coverage level, it can extend its coverage to neighboring cells earlier in order to serve MTC devices within the coverage of neighboring cells. With coverage extension of 20dB, the network may have potentially much more coverage overlap than the coverage of existing networks without coverage extension.

Embodiments enable different levels of coverage extension to be managed by the eNB by controlling the repetition pattern of the PBCH.

Embodiments have better spectral efficiency compared to an arrangement that only has 1 level (i.e. 20 dB) of coverage extension and allows the eNB to control the level of coverage (without any changes to the transmission power).

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A wireless telecommunication network base station method, comprising:
repeating transmission of a physical broadcast channel within a 10ms radio frame of a downlink physical resource; **characterized in that**
said step of repeating transmission comprises repeating transmission of said physical broadcast channel a plurality of times within said radio frame with one of a plurality of patterns, each pattern containing a different number of repetitions in order that each provides a different level of coverage extension, such that said base station provides a normal level of coverage in which said physical broadcast channel is broadcast once in a radio frame and a plurality of extended levels of coverage extension where said physical broadcast channel is broadcast a plurality of times in a radio frame, said plurality of patterns comprising nested sets of repeating transmissions of said physical broadcast channel within said radio frame.

2. The method of claim 1, comprising dynamically selecting between said plurality of patterns in order to change the coverage level provided.

3. The method of any one of claims 1 or 2, wherein a pattern with a lower number of repeating transmissions comprises a subset of a pattern with a higher number of repeating transmissions and wherein each pattern at a higher level in the nested hierarchy includes all the repetitions of a pattern which is lower in the nested hierarchy.

4. The method of any preceding claim, comprising:
selecting between said plurality of patterns of repeating transmissions.

5. The method of any one preceding claim, comprising:
selecting between said plurality of patterns of repeating transmissions based on at least one of time and base station load.

6. The method of any preceding claim, comprising:
selecting one of said plurality of patterns having a lower number of repetitions for a first period and then selecting one of said plurality of patterns having a higher number of repetitions for a second period.

7. The method of any preceding claim, wherein said step of repeating comprises repeating transmission of a subset of information carried by said physical broadcast channel.

8. The method of any preceding claim, wherein said physical broadcast channel carries an indication of its repetition within said radio frame.

9. A wireless telecommunication network base station, comprising:
transmission logic operable to repeat transmission of a physical broadcast channel within a 10ms radio frame of a downlink physical resource; **characterized in that**
said transmission logic is operable to repeat transmission of said physical broadcast channel a plurality of times within said radio frame with one of a plurality of patterns each pattern containing a different number of repetitions in order that each provides a different level of coverage extension, such that said base station provides a normal level of coverage in which said physical broadcast channel is broadcast once in a radio frame and a plurality of extended levels of coverage extension where said physical broadcast channel is broadcast a plurality of times in a radio frame said plurality of patterns comprising nested sets of repeating transmissions of said physical broadcast channel within said radio frame.

10. A wireless telecommunication user equipment method, comprising:
receiving repeating transmission of a physical broadcast channel within a 10ms radio frame of a downlink physical resource; **characterized in that**
said step of receiving repeating transmission comprises receiving repeating transmission of said physical broadcast channel a plurality of times within said radio frame with one of a plurality of patterns each pattern containing a different number of repetitions in order that each provides a different level of coverage extension, such that a normal level of coverage in which said physical broadcast channel is broadcast once in a radio frame and a plurality of extended levels of coverage extension where said physical broadcast channel is broadcast a plurality of times in a radio frame are provided said plurality of patterns comprising nested sets of repeating transmissions of said physical broadcast channel within said radio frame.

11. Wireless telecommunication user equipment, comprising:
reception logic operable to receive repeating transmission of a physical broadcast channel within a 10ms radio frame of a downlink physical resource; **characterized in that**
said reception logic is operable to receive repeating transmission of said physical broadcast channel a plurality of times within said radio frame with one of a plurality of patterns each pattern containing a different number of repetitions in order that each provides a different level of coverage extension, such that a normal level of coverage in which said physical broadcast channel is broadcast once in a radio frame and a plurality of extended levels of coverage extension where said physical broadcast channel is broadcast a plurality of times in a radio frame are provided, said plurality of patterns comprising nested sets of repeating transmissions of said physical broadcast channel within said radio frame .

12. A computer program product operable, when executed on a computer, to perform the method steps of any one of claims 1 to 8 or 10.

## Patentansprüche

1. Drahtlose Kommunikationsnetzwerk-Basisstation-Verfahren, umfassend:
Wiederholen der Übertragung eines physikalischen Rundfunkkanals innerhalb eines 10-ms-Funkrahmens einer physikalischen Downlink-Ressource; **dadurch gekennzeichnet, dass**
besagter Schritt des Wiederholens der Übertragung umfasst das Wiederholen der Übertragung besagten physikalischen Rundfunkkanals eine Vielzahl von Malen innerhalb besagten Funkrahmens mit einer Vielzahl von Mustern, wobei jedes Muster eine unterschiedliche Anzahl von Wiederholungen umfasst, damit jede einen unterschiedlichen Grad an Abdeckungserweiterung aufweist, sodass besagte Basisstation einen normalen Grad an Abdeckung bereitstellt, in dem besagter physikalische Rundfunkkanal einmal innerhalb eines Funkrahmens rundgesendet wird, und eine Vielzahl erweiterter Grade von Abdeckungserweiterung, wo besagter physikalische Rundfunkkanal eine Vielzahl von Malen rundgesendet wird in einem Funkrahmen, wobei besagte Vielzahl von Mustern verschachtelte Sätze von wiederholten Übertragungen besagten physikalischen Rundfunkkanals innerhalb besagten Funkrahmens umfasst.

2. Verfahren nach Anspruch 1, umfassend eine dynamische Auswahl aus besagter Vielzahl von Mustern, um den bereitgestellten Abdeckungsgrad zu ändern.

3. Verfahren nach einem beliebigen der Ansprüche 1 oder 2, wobei ein Muster mit einer niedrigeren Anzahl von Übertragungswiederholungen umfasst einen Untersatz eines Musters mit einer höheren Anzahl von Übertragungswiederholungen und wobei jedes Muster mit einem höheren Grad in der verschachtelten Hierarchie alle Wiederholungen eines Musters einschließt, welches niedriger steht in der verschachtelten Hierarchie.

4. Verfahren nach einem beliebigen der vorhergehenden Ansprüche, umfassend:
Auswählen aus besagter Vielzahl von Mustern von Übertragungswiederholungen.

5. Verfahren nach einem beliebigen der vorhergehenden Ansprüche, umfassend:
Auswählen aus besagter Vielzahl von Mustern von Übertragungswiederholungen auf Grundlage von Zeit oder Basisstationsbelastung.

6. Verfahren nach einem beliebigen der vorhergehenden Ansprüche, umfassend:
Auswählen eines aus besagter Vielzahl von Mustern, die eine niedrigere Anzahl von Wiederholungen für einen ersten Zeitraum aufweisen, und dann Auswählen eines aus besagter Vielzahl von Mustern, welche eine höhere Anzahl von Wiederholungen für einen zweiten Zeitraum aufweisen.

7. Verfahren nach einem beliebigen der vorhergehenden Ansprüche, wobei besagter Schritt des Wiederholens umfasst das Wiederholen einer Übertragung eines Untersatzes von Information, die getragen wird von besagtem physikalischem Rundfunkkanal.

8. Verfahren nach einem beliebigen der vorhergehenden Ansprüche, wobei besagter physikalischer Rundfunkkanal eine Anzeige seiner Wiederholungen innerhalb besagten Funkrahmens trägt.

9. Drahtlose Telekommunikationsnetzwerk-Basisstation, umfassend:
eine Übertragungslogik, die betreibbar ist zum Übertragen eines physikalischen Rundfunkkanals in einem 10-ms-Funkrahmen einer physikalischen Downlink-Ressource; **dadurch gekennzeichnet, dass**
besagte Übertragungslogik betreibbar ist zum Wiederholen der Übertragung umfasst das Wiederholen der Übertragung besagten physikalischen Rundfunkkanals eine Vielzahl von Malen innerhalb besagten Funkrahmens mit einer Vielzahl von Mustern, wobei jedes Muster eine unterschiedliche Anzahl von Wiederholungen umfasst, damit jede einen unterschiedlichen Grad an Abdeckungserweiterung aufweist, sodass besagte Basisstation einen normalen Grad an Abdeckung bereitstellt, in dem besagter physikalische Rundfunkkanal einmal innerhalb eines Funkrahmens rundgesendet wird, und eine Vielzahl erweiterter Grade von Abdeckungserweiterung, wo besagter physikalische Rundfunkkanal eine Vielzahl von Malen rundgesendet wird in einem Funkrahmen, wobei besagte Vielzahl von Mustern verschachtelte Sätze von wiederholten Übertragungen besagten physikalischen Rundfunkkanals innerhalb besagten Funkrahmens umfasst.

10. Drahtloses Telekommunikations-Teilnehmergerät-Verfahren, umfassend:
Empfangen wiederholter Übertragungen eines physikalischen Rundfunkkanals in einem 10-ms-Funkrahmen einer physikalischen Downlink-Ressource; **dadurch gekennzeichnet, dass**
besagter Schritt des Empfangens von Übertragungswiederholungen umfasst das Empfangen von Übertragungswiederholungen besagten physikalischen Rundfunkkanals eine Vielzahl von Malen innerhalb besagten Funkrahmens mit einer Vielzahl von Mustern, wobei jedes Muster eine unterschiedliche Anzahl von Wiederholungen umfasst, damit jede einen unterschiedlichen Grad an Abdeckungserweiterung aufweist, sodass ein normaler Grad an Abdeckung bereitgestellt wird, in dem besagter physikalische Rundfunkkanal einmal innerhalb eines Funkrahmens rundgesendet wird, und eine Vielzahl erweiterter Grade von Abdeckungserweiterung, wo besagter physikalische Rundfunkkanal eine Vielzahl von Malen rundgesendet wird in einem Funkrahmen, wobei besagte Vielzahl von Mustern verschachtelte Sätze von wiederholten Übertragungen besagten physikalischen Rundfunkkanals innerhalb besagten Funkrahmens umfasst.

11. Drahtloses Telekommunikations-Teilnehmergerät, umfassend:
eine Empfangslogik, die betreibbar ist zum Empfangen von Übertragungswiederholungen eines physikalischen Rundfunkkanals in einem 10-ms-Funkrahmen einer physikalischen Downlink-Ressource; **dadurch gekennzeichnet, dass**
besagte Empfangslogik betreibbar ist zum Empfangen von Übertragungswiederholungen besagten physikalischen Rundfunkkanals eine Vielzahl von Malen innerhalb besagten Funkrahmens mit einer Vielzahl von Mustern, wobei jedes Muster eine unterschiedliche Anzahl von Wiederholungen umfasst, damit jede einen unterschiedlichen Grad an Abdeckungserweiterung aufweist, sodass ein normaler Grad an Abdeckung bereitgestellt wird, in dem besagter physikalische Rundfunkkanal einmal innerhalb eines Funkrahmens rundgesendet wird, und eine Vielzahl erweiterter Grade von Abdeckungserweiterung, wo besagter physikalische Rundfunkkanal eine Vielzahl von Malen rundgesendet wird in einem Funkrahmen, wobei besagte Vielzahl von Mustern verschachtelte Sätze von wiederholten Übertragungen besagten physikalischen Rundfunkkanals innerhalb besagten Funkrahmens umfasst.

12. Computerprogramm-Produkt, betreibbar, um bei Ausführung auf einem Computer die Verfahrensschritte nach einem beliebigen der Ansprüche 1 bis 8 oder 10 durchzuführen.

## Revendications

1. Procédé de station de base de réseau de télécommunication sans fil, comprenant l'étape suivante :
répéter l'émission d'un canal de diffusion physique à l'intérieur d'une trame radio de 10 ms d'une ressource physique de liaison descendante ; **caractérisée en ce que**
ladite étape de répétition d'émission comprend la répétition d'émission dudit canal de diffusion physique une pluralité de fois à l'intérieur de ladite trame radio avec une séquence parmi une pluralité de séquences, chaque séquence contenant un nombre différent de répétitions afin que chacune fournisse un niveau différent d'extension de couverture, de sorte que ladite station de base fournisse un niveau normal de couverture dans lequel ledit canal de diffusion physique est diffusé une fois dans une trame radio et une pluralité de niveaux étendus d'extension de couverture dans lesquels ledit canal de diffusion physique est diffusé une pluralité de fois dans une trame radio, ladite pluralité de séquences comprenant des ensembles imbriqués de répétitions d'émission dudit canal de diffusion physique à l'intérieur de ladite trame radio.

2. Procédé selon la revendication 1, comprenant une étape de sélection dynamique parmi ladite pluralité de séquences afin de modifier le niveau de couverture fourni.

3. Procédé selon l'une quelconque des revendications 1 ou 2, dans lequel une séquence avec un nombre plus faible de répétitions d'émission comprend un sous-ensemble d'une séquence avec un plus grand nombre de répétitions d'émission et dans lequel chaque séquence de plus haut niveau dans la hiérarchie imbriquée inclut toutes les répétitions d'une séquence qui est plus bas dans la hiérarchie imbriquée.

4. Procédé selon l'une quelconque des revendications précédentes, comprenant l'étape suivante :
effectuer une sélection parmi ladite pluralité de séquences de répétition d'émission.

5. Procédé selon l'une quelconque des revendications précédentes, comprenant l'étape suivante :
effectuer une sélection parmi ladite pluralité de séquences de répétition d'émission en fonction d'au moins un élément parmi un instant et une charge de station de base.

6. Procédé selon l'une quelconque des revendications précédentes, comprenant l'étape suivante :
sélectionner une séquence de ladite pluralité de séquences présentant un nombre plus faible de répétitions pendant une première période puis sélectionner une séquence de ladite pluralité de séquences présentant un nombre plus élevé de répétitions pendant une deuxième période.

7. Procédé selon l'une quelconque des revendications précédentes, dans lequel ladite étape de répétition comprend la répétition d'émission d'un sous-ensemble d'informations transportées par ledit canal de diffusion physique.

8. Procédé selon l'une quelconque des revendications précédentes, dans lequel ledit canal de diffusion physique transporte une indication de sa répétition à l'intérieur de ladite trame radio.

9. Station de base de réseau de télécommunication sans fil, comprenant :
une logique d'émission permettant de répéter l'émission d'un canal de diffusion physique à l'intérieur d'une trame radio de 10 ms d'une ressource physique de liaison descendante ; **caractérisée en ce que**
ladite logique d'émission permet de répéter l'émission dudit canal de diffusion physique une pluralité de fois à l'intérieur de ladite trame radio avec une séquence parmi une pluralité de séquences, chaque séquence contenant un nombre différent de répétitions afin que chacune fournisse un niveau différent d'extension de couverture, de sorte que ladite station de base fournisse un niveau normal de couverture dans lequel ledit canal de diffusion physique est diffusé une fois dans une trame radio et une pluralité de niveaux étendus d'extension de couverture dans lesquels ledit canal de diffusion physique est diffusé une pluralité de fois dans une trame radio, ladite pluralité de séquences comprenant des ensembles imbriqués de répétitions d'émission dudit canal de diffusion physique à l'intérieur de ladite trame radio.

10. Procédé d'équipement utilisateur de réseau de télécommunication sans fil, comprenant l'étape suivante :
recevoir une répétition d'émission d'un canal de diffusion physique à l'intérieur d'une trame radio de 10 ms d'une ressource physique de liaison descendante; **caractérisée en ce que**
ladite étape de réception de répétition d'émission comprend la réception de répétition d'émission dudit canal de diffusion physique une pluralité de fois à l'intérieur de ladite trame radio avec une séquence parmi une pluralité de séquences, chaque séquence contenant un nombre différent de répétitions afin que chacune fournisse un niveau différent d'extension de couverture, de sorte qu'un niveau normal de couverture dans lequel ledit canal de diffusion physique est diffusé une fois dans une trame radio et une pluralité de niveaux étendus d'extension de couverture dans lesquels ledit canal de diffusion physique est diffusé une pluralité de fois dans une trame radio soient fournis, ladite pluralité de séquences comprenant des ensembles imbriqués de répétitions d'émission dudit canal de diffusion physique à l'intérieur de ladite trame radio.

11. Équipement utilisateur de télécommunication sans fil, comprenant :
une logique de réception permettant de recevoir une répétition d'émission d'un canal de diffusion physique à l'intérieur d'une trame radio de 10 ms d'une ressource physique de liaison descendante ; **caractérisée en ce que**
ladite logique de réception permet de recevoir une répétition d'émission dudit canal de diffusion physique une pluralité de fois à l'intérieur de ladite trame radio avec une séquence parmi une pluralité de séquences, chaque séquence contenant un nombre différent de répétitions afin que chacune fournisse un niveau différent d'extension de couverture, de sorte qu'un niveau normal de couverture dans lequel ledit canal de diffusion physique est diffusé une fois dans une trame radio et une pluralité de niveaux étendus d'extension de couverture dans lesquels ledit canal de diffusion physique est diffusé une pluralité de fois dans une trame radio soient fournis, ladite pluralité de séquences comprenant des ensembles imbriqués de répétitions d'émission dudit canal de diffusion physique à l'intérieur de ladite trame radio.

12. Produit-programme informatique permettant, lorsqu'il est exécuté sur un ordinateur, de mettre en oeuvre les étapes de procédé selon l'une quelconque des revendications 1 à 8 ou 10.
